# EUROPÄISCHE PATENTANMELDUNG

(11) **EP 3 726 052 A1**
(43) Veröffentlichungstag der Anmeldung: **21.10.2020**
(21) Anmeldenummer: 20170257.8
(22) Anmeldetag: 17.04.2020
(51) Int. Cl.: F03D 80/50, B23Q 3/06, B25B 1/24

(54) **VERFAHREN UND VORRICHTUNG ZUR ABLAGE EINES GEGENSTANDS**

(30) Priorität: 18.04.2019 DE 102019110396
(71) Anmelder: Ematec Manfred Eberhard Maschinen- und Greiftechnik e.K., 87766 Memmingerberg (DE)
(72) Erfinder: Eberhard, Manfred M., 87700 Memmingen (DE)
(74) Vertreter: Patentanwälte Olbricht, Buchold, Keulertz Partnerschaft mbB

(57) **Zusammenfassung**

Die Erfindung betrifft ein Verfahren und eine Vorrichtung zur Ablage eines Gegenstands mit im Raum gewölbten Flächen wie beispielsweise eines Rotorblatts für eine Windkraftanlage, wobei Auflageelemente an eine gewölbte Fläche angepasst werden.

## Beschreibung

Die Erfindung betrifft ein Verfahren sowie eine Vorrichtung zur Ablage eines Gegenstands mit im Raum gewölbten Flächen, wie beispielsweise eines Rotorblatts für eine Windkraftanlage.

Typische Windkraftanlagen haben heutzutage eine Nabenhöhe bis zu 160 m und werden mit Rotorblättern ausgestattet, welche beispielsweise eine Länge von 100 m aufweisen und ein typisches Gewicht von 30 bis 40 t haben. Gemäß Herstellerangaben können derartige Rotorblätter oftmals nur an speziellen Punkten ergriffen werden, da das erhebliche Gewicht über die Tragstruktur des Rotorblatts zuverlässig in ein Hebezeug abgeleitet werden muss. Dies limitiert Handlingsmöglichkeiten für ein Rotorblatt.

Darüber hinaus ist es bekannt, dass Rotorblätter nicht komplett starre Körper sind, sondern insbesondere die Oberfläche des Rotorblattes (wie das ganze Rotorblatt selber) bei Belastung (zum Beispiel im Betrieb oder bei der Montage unter seinem Eigengewicht) ihre anfängliche (unbelastete) Wölbung verändern, was bei einem Ablegen in einer Transportvorrichtung ebenfalls zu berücksichtigen ist.

Im Stand der Technik sind beispielsweise Hebezeuge oder Hebezangen bekannt, welche dem speziellen Querschnittsprofil eines Rotorblatts angepasst sind. Dadurch kann ein Rotorblatt ideal gelagert werden und vergleichsweise einfach transportiert oder montiert werden. Das Anpassen einer solchen Hebezange an ein jeweiliges Rotorblatt ist jedoch umständlich und eine eventuelle Umrüstung auf ein anderes Rotorblatt entsprechend aufwändig.

Es ist deshalb eine Aufgabe der Erfindung, ein Verfahren zur Ablage eines Gegenstands mit im Raum gewölbten Flächen wie beispielsweise einem Rotorblatt vorzuschlagen, welches im Vergleich zu bekannten Ausführungen alternativ oder besser ausgeführt ist. Es ist des Weiteren eine Aufgabe der Erfindung, eine zugehörige Vorrichtung vorzuschlagen.

Dies wird erfindungsgemäß durch ein Verfahren und eine Vorrichtung gemäß den jeweiligen Hauptansprüchen erreicht. Vorteilhafte Ausführungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zur Ablage eines Gegenstands mit im Raum gewölbten Flächen. Insbesondere kann das Verfahren bei einem Rotorblatt angewendet werden, welches typischerweise zumindest eine solche gewölbte Fläche hat. Das Verfahren weist folgende Schritte auf:
- Bereitstellung einer Anzahl von Auflageelementen, die jeweils von mindestens einem Antrieb bewegbar sind,
- Positionieren des Gegenstands vertikal über dem Auflageelement,
- Absenken des Gegenstands in Richtung der Auflageelemente,
- Aktivieren der Antriebe derart, dass die jeweiligen Auflageelemente gegen die Fläche angestellt werden,
- Ausrichten zumindest eines Teils der Auflageelemente entsprechend der Orientierung der gewölbten Fläche des Gegenstands,
- Arretieren des Antriebs, um so die Lage der Auflageelemente zu dem Gegenstand festzulegen.

Mittels des erfindungsgemäßen Verfahrens ist eine Anpassung der Auflageelemente an die gewölbte Fläche in vorteilhafter Weise möglich, so dass eine möglichst gleichmäßige und auf viele Auflageelemente verteilte Krafteinleitung erfolgt. Die Auflageelemente sind dabei nicht nur für ein bestimmtes Rotorblatt angepasst, sondern können ad hoc bei dem gewünschten Handling eines bestimmten Rotorblatts angepasst werden, ohne dass hierfür irgendwelche Umbauarbeiten oder Formgebungen erforderlich sind. Das Handling eines Rotorblatts kann damit erheblich vereinfacht werden.

Wenn der Gegenstand vertikal über dem Auflageelement positioniert wird, kann er sich beispielsweise in einer im Wesentlichen horizontalen Ausrichtung befinden. Der Begriff "vertikal" betrifft also nicht die räumliche Orientierung des Gegenstands, sondern die Relation zwischen Gegenstand und Auflageelementen.

Wenn die Auflageelemente gegen die Fläche gestellt wurden, so liegen sie typischerweise an der Fläche an. Hierdurch kann eine Krafteinleitung erfolgen.

Es sei erwähnt, dass auch alle Auflageelemente entsprechend der Orientierung der gewölbten Fläche des Gegenstands ausgerichtet werden können. Durch die Ausrichtung kann eine möglichst gute Auflage sichergestellt werden.

Das Arretieren erfolgt bevorzugt relativ zu einer Grundstruktur, an welcher die Auflageelemente befestigt sind. Dadurch kann eine unerwünschte Bewegung des Gegenstands relativ zu dieser Grundstruktur durch reines Bewegen der Auflageelemente vermieden werden.

Gemäß einer möglichen Ausführung ist vorgesehen, dass für jedes Auflageelement ein eigener Antrieb vorgesehen ist, der unabhängig von den anderen Antrieben gesteuert werden kann. Beispielsweise kann hierfür eine jeweilige eigene Hydraulikpumpe oder alternativ ein jeweiliges regelbares Ventil für jeden Antrieb vorgesehen sein. Gemäß einer weiteren möglichen Ausführung ist ein Zentralantrieb vorgesehen, beispielsweise eine Hydraulikpumpe, wobei für jeden Antrieb ein jeweiliger Arbeitszylinder vorgesehen sein kann. Dadurch können alle Arbeitszylinder und somit auch alle Auflageelemente gleichartig bewegt werden. In diesem Fall ist es vorteilhaft, wenn die von den Auflageelementen auf den Gegenstand wirkenden Bewegungskräfte möglichst gering sind, also die Bewegung der Auflageelemente schnell stoppt.

Die Bewegung der Auflageelemente kann insbesondere deaktiviert werden, wenn der von einem Belastungssensor gemessene Wert einen Schwellenwert überschreitet. Dies ermöglicht eine automatische Anpassung der Auflageelemente an den Gegenstand.

Als Sensor kann beispielsweise gemäß einer Ausführung ein Flusssensor für verwendete Hydraulikflüssigkeit vorgesehen sein. Dadurch kann beispielsweise erkannt werden, wenn die noch in einen entsprechenden Hydraulikzylinder strömende Hydraulikflüssigkeit zurückgeht oder keine Flüssigkeit mehr reinströmt, was darauf hindeuten kann, dass das Auflageelement bereits an dem Gegenstand anliegt.

Es kann auch ein Bewegungssensor für die Bewegung des Auflageelements verwendet werden, wobei beispielsweise erkannt werden kann, wenn sich ein Auflageelement nicht mehr bewegt, da es bereits an dem Gegenstand anliegt.

Ebenso kann ein Strommesssensor verwendet werden, wenn beispielsweise ein Elektroantrieb als Antrieb vorgesehen ist. Dadurch kann beispielsweise erkannt werden, wenn ein zur weiteren Bewegung eines jeweiligen Auflageelements nötiger Strom sehr stark steigt, was auf eine Anlage des Auflageelements an den Gegenstand hinweist.

Gemäß einer bevorzugten Ausführung wird ferner ein Niederhalter von oben gegen den Gegenstand angestellt. Dabei findet sich bevorzugt der Gegenstand zwischen den Auflageelementen und dem Niederhalter. Dies ermöglicht es, den Gegenstand in den Auflageelementen zu fixieren, so dass ein Wegbewegen des Gegenstands von den Auflageelementen selbst bei Änderung von Ort oder Lage der gesamten Einheit aus Auflageelementen, Gegenstand und Niederhalter nicht mehr möglich ist. Dies kann beispielsweise ermöglichen, dass ein entsprechender Montageprozess durchgeführt wird, bei welchem der Gegenstand in Form eines Rotorblatts an einer Rotornabe montiert wird.

Bei einer bevorzugten Ausgestaltung der Erfindung ist vorgesehen, dass bei einer Arretierung des Antriebes das Auflageelement nicht gegenüber dem von dem Antrieb angetriebenen Träger festgelegt wird.

Vorteilhafterweise ist eine kardanische Lagerung des Auflageelementes an dem Träger vorgesehen. Dabei zeichnet sich eine kardanische Lagerung dadurch aus, dass das Auflageelement und der Träger nicht nur entlang einer Drehachse zueinander gelenkig gelagert sind, sondern bezüglich einer Vielzahl von Drehachsen und sich so in einfacher Weise eine flexible Ausrichtung des Auflageelementes gegenüber dem Träger im Raum, zum Anstellen an die Fläche des Gegenstandes, ergibt.
Das vorgeschlagene Merkmal bewirkt, dass zwar die gegen die Fläche angestellte Position des Trägers mit dem Auflageelement eingefroren ist aber trotzdem noch eine Ausrichtbarkeit des Auflageelementes gegenüber dem Träger möglich ist und so Änderungen der Fläche des Gegenstandes, egal aus welchem Grund, durch diese Flexibilität ausgeglichen werden kann. Dieser Vorschlag ist ein weiterer Beitrag der Erfindung für eine schonende Behandlung des Gegenstandes, insbesondere dann, wenn hohe Spitzen von Flächendrücken auf dem Gegenstand vermieden werden sollen, die unter Umständen zu einer Verletzung oder Zerstörung der Fläche oder des Gegenstandes führen könnten.

Bei einer bevorzugten Weitergestaltung der Erfindung ist vorgesehen, dass nach der Ablage des Gegenstandes der Gegenstand abgehoben wird und hierbei sich unter der Gewichtskraft des Gegenstandes die mindestens eine Fläche sich in ihrer Wölbung ändert, und sich dabei das mindestens eine Auflageelement mit seiner elastischen Ausstattung und/oder seiner Lagerung am Träger erneut gegen die veränderte Fläche ausrichtet.

Das eingangs beschriebene Verfahren zur Ablage eines Gegenstandes wird durch diesen Vorschlag weiter entwickelt. Oftmals erfolgt nach dem Ablegen des Gegenstandes in der jeweiligen Vorrichtung auch in Transport des Gegenstandes, also ein Anheben des Gegenstandes. Abgeschlossen wird dieser Vorgang oftmals wieder mit einer Ablage des Gegenstandes, zum Beispiel die Ablage wieder am Boden oder die Ablage des Gegenstandes einem anderem Ort außerhalb der Vorrichtung zum Beispiel die Montage des Rotorblattes an der Nabe eine Windkraftanlage. Insofern umfasst der beschriebene Vorschlag auch ein Montageverfahren, bestehend aus Ablegen wie beschrieben und den Anheben wie beschrieben oder ein Ablageverfahren, bestehend aus einem ablegen, wie beschrieben, und einen anheben, wie ebenfalls beschrieben.

Der Pfiff dieses Vorschlages liegt insbesondere darin, dass sich die Erfindung (sowohl nach dem Verfahren wie auch mit der beschriebenen Vorrichtung) immer an die unterschiedlichen Wölbungen des Gegenstandes automatisch adaptiert und so immer ein sicheren Verbund zwischen der Vorrichtung und dem lastgebenden Gegenstand sichergestellt ist.

Diese automatische Ausrichtung (entweder aufgrund der elastischen Ausstattung des Auflageelementes und / oder der kardanischen Lagerung des Auflageelementes am Träger) erlaubt eine hohe Flexibilität für den Einsatz dieses Verfahrens zum Beispiel bei verschiedenen Gegenständen mit unterschiedlichen Konturen (man spart sich Umrüstzeiten) und andererseits auch bei Gegenständen die "weich" sind, also deren Fläche (= Oberfläche) des Gegenstandes unter Belastung sich in seiner Wölbung ändert, also keine hohe Steifigkeit aufweist. Auch solche Gegenstände können mit der Erfindung (nach der Verfahren oder der Vorrichtung) zuverlässig ergriffen und bewegt werden.
Die Erfindung betrifft des Weiteren eine Vorrichtung zur Ablage eines Gegenstands mit im Raum gewölbten Flächen, wie beispielsweise eines Rotorblatts. Die Vorrichtung weist zumindest eine Anzahl von Auflageelementen auf, die jeweils von unabhängigen Antrieben im Raum beweg- und positionierbar sind. Vorzugsweise ist dabei jedes Auflageelement auf einem, vom jeweiligen Antrieb bewegbaren Träger kardanisch gelagert. Die Vorrichtung weist ferner eine Arretierschaltung auf, die das jeweilige Auflageelement in der jeweiligen räumlichen Lage befestigt.

Mittels der erfindungsgemäßen Vorrichtung können die bereits mit Bezug auf das erfindungsgemäße Verfahren beschriebenen Vorteile erreicht werden. Insbesondere kann mit einer solchen Vorrichtung ein Gegenstand wie beispielsweise ein Rotorblatt vorteilhaft gehalten werden, wobei auftretende Kräfte von den Auflageelementen aufgenommen werden können. Die räumliche Lage bezieht sich dabei insbesondere auf eine Anpassung an die gewölbte Fläche.

Durch die kardanische Lagerung ist eine besonders vorteilhafte Anpassung der Auflageelemente an die gewölbte Fläche möglich.

Gemäß einer bevorzugten Ausführung weist zumindest ein Auflageelement oder weisen alle Auflageelemente eine dem Gegenstand zugewandte elastische Oberfläche auf. Dadurch kann eine besonders vorteilhafte Anpassung an die gewölbte Fläche des Gegenstands erreicht werden. Dies erfordert typischerweise keinen manuellen Eingriff, und zwar aufgrund der Elastizität.

Bei einer bevorzugten Ausgestaltung der Erfindung ist vorgesehen, dass zumindest ein Auflageelement ein Auflagenkissen aus elastischen Material aufweist. Als elastisches Material ist dabei zum Beispiel Polyurethan oder andere elastische Kunststoffe vorgesehen. Selbstverstänlich bilden solch ein Auflagekissen auch eine elastische Oberfläche aus. Die Höhe des Kissen stegert den Flexibilitätsgrad dieser Ausgestaltung.

Bei einer bevorzugten Ausgestaltung der Erfindung ist vorgesehen, dass die an der Fläche des Gegenstandes anliegende Anlagefläche des Auflageelementes größer, insbesondere sehr viel größer ist wie der lastabtragende Querschnitt des das Auflageelement tragenden Trägers.

Je größer die lastübertragende Anlagefläche des Auflageelement es ist, um zur kleiner ist die Flächenbelastung oder der Flächendruck, der auf die Fläche des Gegenstandes bei einem Anhebeprozess lastet. Geschickterweise wird dabei die Größe der Anlagefläche so dimensioniert, dass hieraus eine Flächenbelastung des Gegenstandes resultiert die maximal dem Wert entspricht die auf den Gegenstand auch bei einem normalen Betrieb lastet, daher ist es eine geschickte Ausgestaltung der Vorrichtung, dass die Anlagefläche des Auflageelementes größer ist wie der lastabtragen Querschnitt des Trägers. Vorteilhafterweise ist hierbei ein Verhältnis der Auflagefläche zur Querschnittsfläche von mindestens 2, oder 5 oder 9 vorgesehen.

Es ist aber auch möglich, dass die Anlagefläche des Auflageelementes sehr viel größer ist wie der lastabtragen Querschnitt des Trägers, wobei dann dieses Verhältnis größer 10,15 oder 20 ist.

Gemäß einer bevorzugten Ausführung ist zumindest einem Auflageelement ein Belastungssensor zugeordnet. Dadurch kann die jeweilige Last gemessen werden. Auch allen Auflageelementen kann ein solcher Belastungssensor zugeordnet sein.

Gemäß einer bevorzugten Ausführung ist ein Niederhalter vorgesehen, der durch einen Antrieb gegen den Gegenstand anstellbar ist, wobei sich der Gegenstand in der Halteposition der Vorrichtung zumindest teilweise zwischen den Auflageelementen und dem Niederhalter befindet. Dadurch kann der Niederhalter verwendet werden, um ein Abrutschen oder sonstiges Entfernen des Gegenstands von den Auflageelementen zu verhindern. Dies kann insbesondere während einer Montage des Gegenstands wie beispielsweise eines Rotorblatts an einer Nabe einer Windkraftanlage sinnvoll sein.

Bevorzugt ist eine Steuerung für die Antriebe derart vorgesehen, dass jeder Antrieb unabhängig von einem anderen Antrieb deaktivierbar ist. Dies erlaubt eine separate Einstellung.

Der Antrieb eines jeweiligen Auflageelements kann insbesondere ein Schwenkantrieb oder ein Linearantrieb sein. Derartige Antriebe haben sich für die Praxis als vorteilhaft erwiesen.

Der Antrieb kann insbesondere ein hydraulischer oder pneumatischer Arbeitszylinder oder ein elektrischer Stellantrieb sein. Derartige Antriebe ermöglichen das Aufbringen einer großen Kraft, welche für das Halten von schweren Gegenständen erforderlich ist. Außerdem sind sie leicht zu steuern.

Die Arretierschaltung kann insbesondere ein ansteuerbares Ventil oder ein Schalter oder auch ein Rückschlagventil sein oder aufweisen. Dadurch kann beispielsweise der weitere Fluss von Hydraulikflüssigkeit verhindert werden oder es kann ein Elektromotor gestoppt und/oder blockiert werden. Dadurch können die Auflageelemente in geeigneter Weise arretiert werden.

Die Erfindung betrifft des Weiteren eine Traverse, ein Gehänge, ein Lasttragmittel, ein Rotorblatthebemittel, einen Lagerbock oder ein Lagergestell mit einer erfindungsgemäßen Vorrichtung. Hinsichtlich der erfindungsgemäßen Vorrichtung kann auf alle hierin beschriebenen Ausführungen und Varianten zurückgegriffen werden. Durch die erfindungsgemäße Vorrichtung kann wie beschrieben eine besonders vorteilhafte Anpassung an einen Gegenstand wie beispielsweise ein Rotorblatt mit einer gewölbten Fläche erreicht werden.

Es kann davon gesprochen werden, dass mit der erfindungsgemäßen Vorrichtung ein Bett vorgeschlagen wird, das sich in seiner Kontur dem jeweiligen Bereich des Gegenstands exakt anpassen kann. Die Größe der Auflageelemente kann dabei so gewählt werden, dass die durchschnittliche Flächenbelastung nicht höher liegt als wenn die maximale Windbelastung auf einem Rotorblatt ansteht.

Der Einsatzbereich der erfindungsgemäßen Vorrichtung ist daher sehr variabel. Auch wenn in dieser Anmeldung die Verwendung des Verfahrens und der Vorrichtung häufig mit Bezug auf ein Rotorblatt für Windkraftanlagen beschrieben wird, stellt dies keine Einschränkung dar.

Gemäß einer möglichen Ausführung ist eine gemeinsame Ansteuerung aller Auflageelemente bzw. deren Antriebe möglich. Dabei können beispielsweise alle Antriebselemente als Hydraulikzylinder ausgebildet sein und parallel angesteuert werden, beispielsweise mit einem zentralen Ventil. Dabei kann die eingenommene Lage arretiert werden. Beispielsweise kann in diesem Fall auch eine fluidische Verbindung zwischen den einzelnen Hydraulikzylindern vorgesehen sein, welche jedoch gegebenenfalls durch ein einzelnes Rückschlagventil pro Auflageelement unterbunden werden kann.

Grundsätzlich ist es auch möglich, auf einen separaten Antrieb zu verzichten. Beispielsweise kann ein Hydraulikzylinder, welcher als erster heruntergedrückt wurde, andere Auflageelemente bzw. Hydraulikzylinder nach oben drücken. Dies entspricht der Ausführung ähnlich zu einem Wasserbett, wobei faktisch der Gegenstand durch Krafteinwirkung auf die Auflageelemente bzw. daran angeordnete Hydraulikzylinder die Formanpassung der Auflageelemente selbst vornimmt.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in einem Ausführungsbeispiel schematisch dargestellt. Es zeigen:
Fig. 1: eine Vorrichtung und einen darüber befindlichen Gegenstand,
Fig. 2: Vorrichtung und Gegenstand mit angepassten Auflageelementen,
Fig. 3: Vorrichtung und Gegenstand, wobei der Gegenstand ausschließlich von den Auflageelementen gehalten wird, und
Fig. 4: Vorrichtung, Gegenstand und einen Niederhalter.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

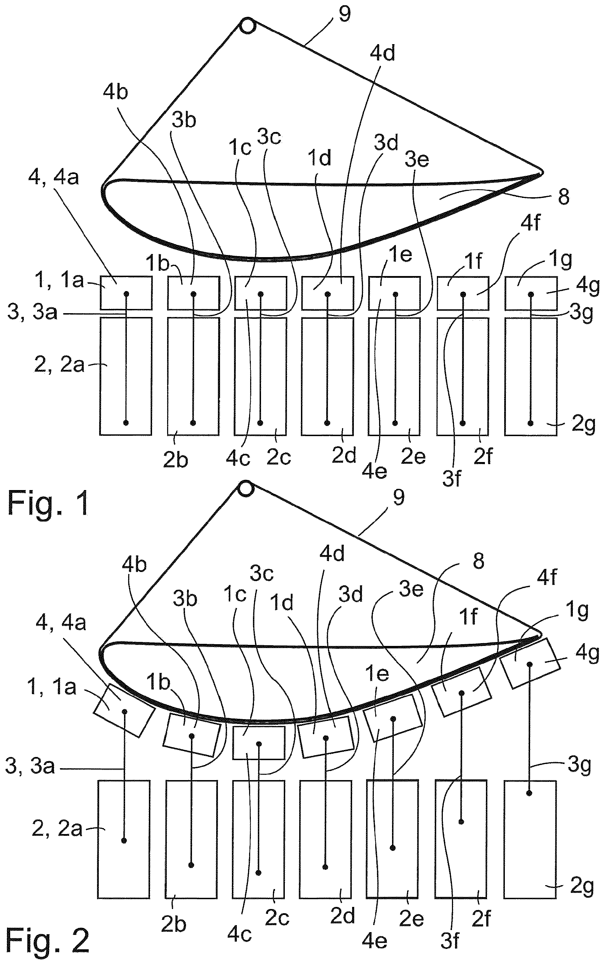

Fig. 1 zeigt schematisch eine Vorrichtung zur Ablage eines Gegenstands sowie einen darüber angeordneten Gegenstand 8, welcher vorliegend ein Rotorblatt für eine Windkraftanlage ist. Die Vorrichtung wird nachfolgend weiter beschrieben werden.

Die Vorrichtung weist eine Anzahl von insgesamt sieben Auflageelementen 1 auf, welche mit den Bezugszeichen 1a, 1b, 1c, 1d, 1e, 1f, 1g bezeichnet sind. Jeweils unterhalb der Auflageelemente 1 sind jeweilige Antriebe 2 angeordnet, welche mit den Bezugszeichen 2a, 2b, 2c, 2d, 2e, 2f, 2g bezeichnet sind. Diese sind jeweils einem der Auflageelemente 1 zugeordnet. Die Antriebe sind als jeweilige Hydraulikzylinder ausgeführt, welche dazu ausgebildet sind, die jeweils darüber befindlichen bzw. zugeordneten Auflageelemente 1 zu heben und zu senken.

Zur Verbindung von Auflageelement 1 und Antrieb 2 dient jeweils ein Träger 3, wobei die Träger mit den Bezugszeichen 3a, 3b, 3c, 3d, 3e, 3f, 3g bezeichnet sind. Die Auflageelemente 1 sind dabei an dem jeweiligen Träger 3 kardanisch gelagert. Dies ermöglicht eine vorteilhafte Bewegung der Auflageelemente 1 im Raum unabhängig von der Position bzw. dem Zustand des jeweiligen Trägers 3.

Auf den jeweiligen Auflageelementen 1 ist jeweils eine elastische Oberfläche 4 ausgebildet, welche jeweils dem Gegenstand 8 zugewandt ist. Die elastischen Oberflächen sind dabei mit den Bezugszeichen 4a, 4b, 4c, 4d, 4e, 4f, 4g bezeichnet.

In dem in Fig. 1 dargestellten Zustand ist der Gegenstand 8 an einem separaten Haltemittel 9 gehalten. Dies ermöglicht es, dass der Gegenstand 8 über der Vorrichtung schwebt. Die Auflageelemente 1 sind dabei noch nicht in Kontakt mit dem Gegenstand 8.

Fig. 2 zeigt einen Zustand, welcher durch Ausführen des erfindungsgemäßen Verfahrens erreicht werden kann. Dabei wurden die Auflageelemente 1 durch ihre jeweiligen Antriebe 2 so weit nach oben gefahren, dass die jeweiligen elastischen Oberflächen 4 mit dem Gegenstand 8 in Kontakt kommen. Dies ermöglicht es, dass der Gegenstand 8 auf den Auflageelementen 1 aufliegt und von diesen getragen wird. Die Antriebe 1 werden in diesem Zustand arretiert, so dass eine weitere Bewegung nicht mehr möglich ist. Dies ermöglicht es, dass der Gegenstand 8 auf den Auflageelementen 1 auch fixiert wird, so dass eine weitere Bewegung des Gegenstands 8 relativ zu den Antrieben 2 nicht mehr möglich ist.

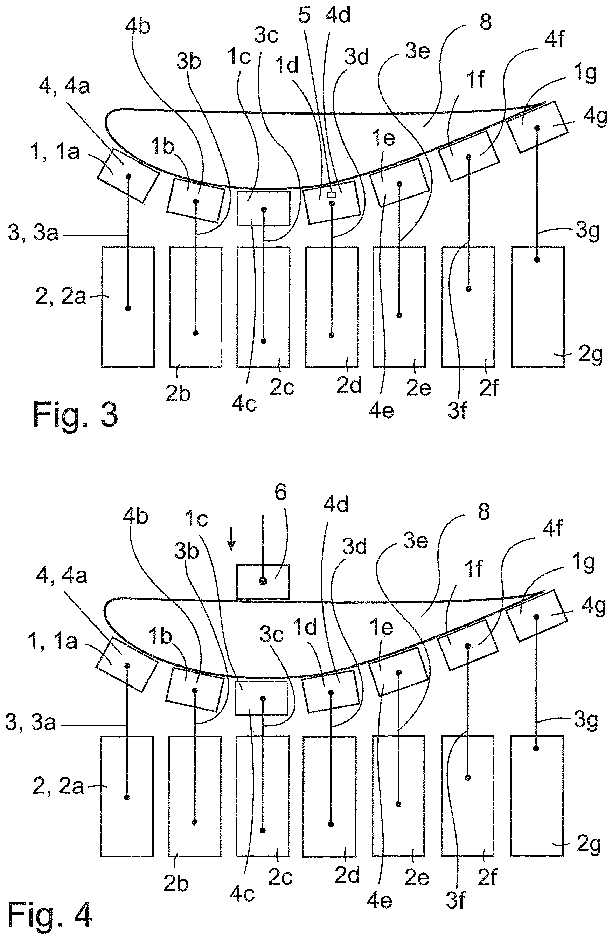

Anschließend kann das separate Haltemittel 9 entfernt werden. Hierdurch entsteht der in Fig. 3 gezeigte Zustand. Der Gegenstand 8 liegt dabei vollständig auf den Auflageelementen 1 auf.

In Fig. 3 ist auch dargestellt, dass in einem der Auflageelemente 1 ein Belastungssensor 5 angeordnet ist. Dies ermöglicht es, die von dem Gegenstand 8 ausgeübte Kraft zu messen, so dass beispielsweise einer Überlastung vorgebeugt werden kann.

Anschließend kann ein Niederhalter 6 von oben auf den Gegenstand 8 angelenkt werden. Dadurch entsteht der in Fig. 4 gezeigte Zustand. Dies ermöglicht es, ein Entfernen des Gegenstands 8 von der Vorrichtung selbst dann zu verhindern, wenn die Vorrichtung beispielsweise gekippt oder anderweitig bewegt werden würde. Dadurch kann der Gegenstand 8, wenn es sich beispielsweise um ein Rotorblatt handelt, transportiert oder beispielsweise an einer Nabe einer Windkraftanlage montiert werden.

Wenn eine vorgesehene Manipulation des Gegenstands 8 beendet ist, kann beispielsweise der Niederhalter 6 wieder von ihm entfernt werden und die Auflageelemente 1 können durch die jeweiligen Antriebe 2 wieder vom Gegenstand 8 wegbewegt werden. Dies ermöglicht es beispielsweise, die Vorrichtung wieder von dem Gegenstand 8 zu entfernen. Der Gegenstand 8 kann dann beispielsweise in einem Zustand sein, welcher seiner endgültigen Verwendung entspricht, beispielsweise kann er an der Nabe einer Windkraftanlage montiert sein. In diesem Fall wird die Vorrichtung wieder nach unten gelassen und kann beispielsweise für die Montage eines weiteren Rotorblatts verwendet werden.

Nachfolgend werden mögliche Merkmale des Vorschlages strukturiert wiedergegeben. Die nachfolgenden strukturiert wiedergegebenen Merkmale können beliebig untereinander kombiniert werden und können in beliebiger Kombination in die Ansprüche der Anmeldung aufgenommen werden. Dem Fachmann ist klar, daß sich die Erfindung bereits aus dem Gegenstand mit den wenigsten Merkmalen ergibt. Insbesondere sind nachfolgend vorteilhafte oder mögliche Ausgestaltungen, nicht jedoch die einzig möglichen Ausgestaltungen der Erfindung wiedergegeben.

Die Erfindung umfasst:
Ein Verfahren zur Ablage eines Gegenstandes mit im Raum gewölbten Flächen, wie z.B. einem Rotorblatt, gekennzeichnet durch die Abfolge folgende Schritte:
- Bereitstellung einer Anzahl von Auflageelementen, die jeweils von mindestens einem Antrieb bewegbar sind,
- Positionieren des Gegenstandes vertikal über dem Auflageelement,
- Absenken des Gegenstandes in Richtung der Auflageelemente,
- Aktivieren der Antriebe derart, dass die jeweiligen Auflageelemente gegen die Fläche angestellt werden,
- Ausrichten zumindest eines Teils der Auflageelemente entsprechend der Orientierung der gewölbten Fläche des Gegenstandes,
- Arretieren des Antriebes, um so die Lage der Auflageelemente zu dem Gegenstand festzulegen.

Das vorstehend genannte Verfahren, wobei die Bewegung des Auflageelementes deaktiviert wird, wenn der von einem Belastungssensor gemessene Wert einen Schwellenwert überschreitet.

Das vorstehend genannte Verfahren, wobei ein Niederhalter von oben gegen den Gegenstand angestellt wird und sich der Gegenstand zwischen den Auflageelementen und dem Niederhalter befindet.

Eine Vorrichtung zur Ablage eines Gegenstandes (8) mit im Raum gewölbten Flächen wie z.B. einem Rotorblatt, zumindest umfassend
- eine Anzahl von Auflageelementen (1, 1a, 1b, 1c, 1d, 1e, 1f, 1g), die jeweils von unabhängigen Antrieben (2,2a,2b,2c,2d,2e,2f,2g) im Raum beweg- und positionierbar sind, wobei vorzugsweise jedes Auflageelement (1, 1a, 1b, 1c, 1d, 1e, 1f, 1g) auf einen, vom jeweiligen Antrieb (2,2a,2b,2c,2d,2e,2f,2g) bewegbaren Träger (3,3a,3b,3c,3d,3e,3f,3g) kardanisch gelagert ist,
- eine Arretierschaltung, die das jeweilige Auflageelement (1, 1a, 1b, 1c, 1d, 1e, 1f, 1g) in der jeweiligen räumlichen Lage festlegt.

Die vorstehend genannte Vorrichtung, wobei zumindest ein Auflageelement (1, 1a, 1b, 1c, 1d, 1e, 1f, 1g) einen den Gegenstand (8) zugewandte elastische Oberfläche (4,4a,4b,4c,4d,4e,4f,4g) aufweist.

Die vorstehend genannte Vorrichtung, wobei zumindest einem Auflageelement (1) ein Belastungssensor (5) zugeordnet ist.

Die vorstehend genannte Vorrichtung, wobei ein Niederhalter (6) vorgesehen ist, der durch einen Antrieb gegen den Gegenstand (8) anstellbar ist, wobei sich der Gegenstand (8) in der Halteposition der Vorrichtung zumindest teilweise zwischen den Auflageelementen (1,1a, 1b, 1c, 1d, 1e, 1f ,1g) und dem Niederhalter (6) befindet.

Die vorstehend genannte Vorrichtung, wobei eine Steuerung für die Antriebe (2,2a,2b,2c,2d,2e,2f,2g) der Art vorgesehen ist, dass jeder Antrieb (2,2a,2b,2c,2d,2e,2f,2g) unabhängig von einem anderen Antrieb (2,2a,2b,2c,2d,2e,2f,2g) deaktivierbar ist,

Die vorstehend genannte Vorrichtung, wobei der Antrieb (2,2a,2b,2c,2d,2e,2f,2g) des Auflageelementes (1, 1a, 1b, 1c, 1d, 1e, 1f, 1g) ein Schwenkantrieb oder ein Linearantrieb ist.

Die vorstehend genannte Vorrichtung, wobei der Antrieb ein hydraulischer oder pneumatischer Arbeitszylinder oder ein elektrischer Stellantrieb ist.

Die vorstehend genannte Vorrichtung, wobei die Arretierschaltung ein ansteuerbares Ventil oder Schalter oder ein Rückschlagventil ist.

Eine Traverse, ein Gehänge, Lasttragemittel, Rotorblatthebemittel, Lagerbock oder Lagergestell mit einer vorstehend genannten Vorrichtung.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlieher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Verfahren zur Ablage eines Gegenstandes mit im Raum gewölbten Flächen, wie z.B. einem Rotorblatt, **gekennzeichnet durch** die Abfolge folgende Schritte:
- Bereitstellung einer Anzahl von Auflageelementen, die jeweils von mindestens einem Antrieb bewegbar sind,
- Positionieren des Gegenstandes vertikal über dem Auflageelement,
- Absenken des Gegenstandes in Richtung der Auflageelemente,
- Aktivieren der Antriebe derart, dass die jeweiligen Auflageelemente gegen die Fläche angestellt werden,
- Ausrichten zumindest eines Teils der Auflageelemente entsprechend der Orientierung der gewölbten Fläche des Gegenstandes,
- Arretieren des Antriebes, um so die Lage der Auflageelemente zu dem Gegenstand festzulegen.

2. Verfahren nach Anspruch 1, **dadurch gekennzeichnet, dass** die Bewegung des Auflageelementes deaktiviert wird, wenn der von einem Belastungssensor gemessene Wert einen Schwellenwert überschreitet.

3. Verfahren nach einem der vorhergehenden Ansprüche, **dadurch gekennzeichnet, dass** ein Niederhalter von oben gegen den Gegenstand angestellt wird und sich der Gegenstand zwischen den Auflageelementen und dem Niederhalter befindet.

4. Verfahren nach einem der vorhergehenden Ansprüche, **dadurch gekennzeichnet, dass** bei einer Arretierung des Antriebes das Auflageelement nicht gegenüber dem von dem Antrieb angetriebenen Träger festgelegt wird.

5. Verfahren nach einem der vorhergehenden Ansprüche, **dadurch gekennzeichnet, dass** nach der Ablage des Gegenstandes der Gegenstand abgehoben wird und hierbei sich unter der Gewichtskraft des Gegenstandes die mindestens eine Fläche sich in ihrer Wölbung ändert, und sich dabei das mindestens eine Auflageelement mit seiner elastischen Ausstattung und/oder seiner Lagerung am Träger erneut gegen die veränderte Fläche ausrichtet.

6. Vorrichtung zur Ablage eines Gegenstandes (8) mit im Raum gewölbten Flächen wie z.B. einem Rotorblatt, zumindest umfassend
- eine Anzahl von Auflageelementen (1,1a,1b,1c,1d,1e,1f,1g), die jeweils von unabhängigen Antrieben (2,2a,2b,2c,2d,2e,2f,2g) im Raum beweg- und positionierbar sind, wobei vorzugsweise jedes Auflageelement (1,1a, 1b, 1c, 1d, 1e, 1f, 1g) auf einen, vom jeweiligen Antrieb (2,2a,2b,2c,2d,2e,2f,2g) bewegbaren Träger (3,3a,3b,3c,3d,3e,3f,3g) kardanisch gelagert ist,
- eine Arretierschaltung, die das jeweilige Auflageelement (1, 1a, 1b, 1c, 1d, 1e, 1f, 1g) in der jeweiligen räumlichen Lage festlegt.

7. Vorrichtung nach dem vorhergehenden Anspruch 6, **dadurch gekennzeichnet, dass** zumindest ein Auflageelement (1,1a, 1b, 1c, 1d, 1e, 1f, 1g) einen den Gegenstand (8) zugewandte elastische Oberfläche (4,4a,4b,4c,4d,4e,4f,4g) aufweist.

8. Vorrichtung nach dem vorhergehenden Anspruch 6 bis 7, **dadurch gekennzeichnet, dass** zumindest ein Auflageelement (1,1a, 1b, 1c, 1d, 1e, 1f, 1g) ein Auflagenkissen aus elastischen Material aufweist.

9. Vorrichtung nach dem vorhergehenden Anspruch 6 bis 8, **dadurch gekennzeichnet, dass** die an der Fläche des Gegenstandes anliegende Anlagefläche des Auflageelementes größer, insbesondere sehr viel größer ist wie der lastabtragende Querschnitt des das Auflageelement tragenden Trägers.

10. Vorrichtung nach einem der vorhergehenden Ansprüche 6 bis 9, **dadurch gekennzeichnet, dass** zumindest einem Auflageelement (1) ein Belastungssensor (5) zugeordnet ist.

11. Vorrichtung nach einem der vorhergehenden Ansprüche 6 bis 10, **dadurch gekennzeichnet, dass** ein Niederhalter (6) vorgesehen ist, der durch einen Antrieb gegen den Gegenstand (8) anstellbar ist, wobei sich der Gegenstand (8) in der Halteposition der Vorrichtung zumindest teilweise zwischen den Auflageelementen (1,1a, 1b, 1c, 1d, 1e, 1f ,1g) und dem Niederhalter (6) befindet.

12. Vorrichtung nach einem der vorhergehenden Ansprüche 6 bis 11, **dadurch gekennzeichnet, dass** eine Steuerung für die Antriebe (2,2a,2b,2c,2d,2e,2f,2g) der Art vorgesehen ist, dass jeder Antrieb (2,2a,2b,2c,2d,2e,2f,2g) unabhängig von einem anderen Antrieb (2,2a,2b,2c,2d,2e,2f,2g) deaktivierbar ist,

13. Vorrichtung nach einem der vorhergehenden Ansprüche 6 bis 12, **dadurch gekennzeichnet, dass** der Antrieb (2,2a,2b,2c,2d,2e,2f,2g) des Auflageelementes (1, 1a, 1b, 1c, 1d, 1e, 1f, 1g) ein Schwenkantrieb oder ein Linearantrieb ist, und/oder ein hydraulischer oder pneumatischer Arbeitszylinder oder ein elektrischer Stellantrieb ist.

14. Traverse, Gehänge, Lasttragemittel, Rotorblatthebemittel, Lagerbock oder Lagergestell mit einer Vorrichtung nach einem der vorhergehenden Ansprüche 6 bis 13.
